# EUROPEAN PATENT SPECIFICATION

(11) **EP 3 553 672 B1**
(45) Date of publication and mention of the grant of the patent: **21.02.2024**
(21) Application number: 19167855.6
(22) Date of filing: 08.04.2019
(51) Int. Cl.: G06F 16/957

(54) **INFORMATION INTERACTION METHOD AND DEVICE AND COMPUTER READABLE STORAGE MEDIUM THEREOF**
INFORMATIONSINTERAKTIONSVERFAHREN UND VORRICHTUNG UND COMPUTERLESBARES SPEICHERMEDIUM DAFÜR
PROCÉDÉ ET DISPOSITIF D'INTERACTION D'INFORMATIONS ET SUPPORT D'INFORMATIONS LISIBLE PAR ORDINATEUR CORRESPONDANT

(30) Priority: 09.04.2018 CN 201810313007
(43) Date of publication of application: 16.10.2019
(73) Proprietor: Beijing Xiaomi Mobile Software Co., Ltd., Beijing 100085 (CN)
(72) Inventor: DONG, Junjie, Beijing, 100085 (CN); CHEN, Shun, Beijing, 100085 (CN); DONG, Hongguang, Beijing, 100085 (CN)
(74) Representative: Kudlek, Franz Thomas

(56) References cited:
- CN-A- 106 375 411
- KR-A- 20120 047 661
- US-A1- 2014 378 112
- Anonymous: "networking - How to get all network pc hardware details? - Server Fault", , 15 December 2016 (2016-12-15), XP055601437, Retrieved from the Internet: URL:https://web.archive.org/web/2016121517 1911/https://serverfault.com/questions/566 719/how-to-get-all-network-pc-hardware-det ails [retrieved on 2019-07-02]
- Blanchae@telus.Net: "Shields Up Port Scanning for Security - TelecomWorld 101", , 26 April 2016 (2016-04-26), XP093022569, Retrieved from the Internet: URL:https://web.archive.org/web/2016042608 2750/https://www.telecomworld101.com/Shiel dsUp.html [retrieved on 2023-02-09]

## Description

### TECHNICAL FIELD

The present disclosure relates to the field of mobile terminal technology, and particularly to an information interaction method, an information interaction device and a computer readable storage medium thereof.

### BACKGROUND

Currently, a browser or an application including a browser kernel is usually installed in a mobile terminal. For the convenience of descriptions, the browsers or applications including a browser kernel are collectively referred to as browsing applications. These browsing applications may be third-party applications or applications built in the mobile terminal. With such browsing applications, users can browse a webpage. In order to ensure the security of an operating system of the mobile terminal, the browsing application creates a separate execution environment for the webpage when the webpage is loaded and displayed, thus no direct information interaction can be performed between the webpage and the operating system of the mobile terminal.

In the related technology, if the browsing application is an application built in the mobile terminal, the mobile terminal can perform secondary programming through a browser component provided in the operating system, to obtain an extended interface, through which the information interaction between the webpage loaded and displayed in the browsing application and the operating system of the mobile terminal can be realized. If the browsing application is a third-party application, because the third-party application usually does not support secondary programming, no extended interface will be provided for the information interaction between the webpage in the browsing application and the operating system of the mobile terminal. A relevant prior art document in this connection is Anonymous: "HTTP persistent connection - Wikipedia", 30 October 2014 (2014-10-30), XP055742807, Retrieved from the Internet: URL:https://en.wikipedia.org/w/index.php?title=HTTP_persistent_connection&oldid=63180 1508.

Document D1 (KR 2012 0047661 A) relates to a method of driving a specific function of the user device by requesting the URI of the user equipment pre-stored in a server.

Document "Shields Up Port Scanning for Security - TelecomWorld 101",, 26 April 2016 (2016-04-26), XP093022569, discloses the possibility for an application to access indirectly, through a server, information related to the ports of a terminal.

### SUMMARY

In order to at least partially overcome the problem that the information interaction between the webpage and the operating system of the mobile terminal is restricted by the browsing application in the related technology, the present disclosure provides an information interaction method and device.

The invention is defined in the independent claims. Advantageous modifications are set forth in the dependent claims.

Thereafter, the server may send the webpage request to an operating system of the mobile terminal through a long connection with the operating system of the mobile terminal, and receive a system response to the webpage request, which is sent from the operating system of the mobile terminal. Finally, the server may send the received system response to the browsing application so as to complete information interaction between a webpage and the operating system of the mobile terminal. It can be seen that, in the embodiments of the present disclosure, whatever the browsing application is an application built in the mobile terminal or a third-party application, the information interaction between the webpage loaded and displayed in the browsing application and the operating system can be achieved via the server. That is to say, the information interaction between the webpage and the operating system of the mobile terminal is no longer limited by the browsing application, and as compared to an information interaction method in the related technology, the information interaction method of the present disclosure has stronger applicability.

It shall be understood that the above general description and the following detailed description are merely exemplary and explanatory and are not intended to be restrictive of the present disclosure.

### BRIEF DESCRIPTION OF THE DRAWINGS

The accompanying drawings, which are incorporated in and constitute a part of this specification, illustrate embodiments consistent with the invention, and together with the description, serve to explain the principles of the invention.
Fig. 1 is a diagram illustrating a structure of a system of an information interaction method according to an example of the present disclosure.
Fig. 2 is a flowchart showing an information interaction method according to an example.
Fig. 3 is a flowchart showing an information interaction method according to an example.
Fig. 4A is a block diagram illustrating an information interaction device according to an example.
Fig. 4B is a block diagram illustrating a sending module according to an example.
Fig. 4C is a block diagram illustrating a sending module according to an example.
Fig. 5 is a block diagram illustrating an information interaction device according to an example.
Fig. 6 is a block diagram illustrating an information interaction device according to an example.

### DETAILED DESCRIPTION

In order to make the objectives, technical solutions and advantages of the present disclosure more distinct, the embodiments of the present disclosure will be further described in detail below in conjunction with the accompanying drawings.

Reference will now be made in detail to examples, examples of which are illustrated in the accompanying drawings. The following description refers to the accompanying drawings in which the same numbers in different drawings represent the same or similar elements unless otherwise represented. The implementations set forth in the following description of examples do not represent all implementations consistent with the present disclosure. Instead, they are merely examples of apparatuses and methods consistent with aspects related to the present disclosure as recited in the appended claims.

The terminology used in the present disclosure is for the purpose of describing exemplary examples only and is not intended to limit the present disclosure. As used in the present disclosure and the appended claims, the singular forms "a," "an" and "the" are intended to include the plural forms as well, unless the context clearly indicates otherwise. It shall also be understood that the terms "or" and "and/or" used herein are intended to signify and include any or all possible combinations of one or more of the associated listed items, unless the context clearly indicates otherwise.

It shall be understood that, although the terms "first," "second," "third," and the like may be used herein to describe various information, the information should not be limited by these terms. These terms are only used to distinguish one category of information from another. For example, without departing from the scope of the present disclosure, first information may be termed as second information; and similarly, second information may also be termed as first information. As used herein, the term "if" may be understood to mean "when" or "upon" or "in response to" depending on the context.

Before explaining the embodiments of the present disclosure in detail, application scenarios involved in the embodiments of the present disclosure will be introduced first.

At present, with the development of Internet technologies, webpages have more and more functions. When a webpage is loaded and displayed by a mobile terminal through an installed browsing application, the browsing application may need to obtain some information in the operating system of the mobile terminal, so as to load and display the webpage according to the obtained information. That is, with the increasingly powerful function of the webpage, the webpage displayed in the browsing application may need to realize data exchange with the operating system of the mobile terminal by the browsing application. For example, when a webpage is loaded and displayed by the browsing application, device information of the mobile terminal may need to be displayed in the webpage, in such case, the browsing application needs to obtain the device information in the operating system of the mobile terminal, and display the obtained information in the webpage, in this way, the information originally in the operating system of the mobile terminal will be finally displayed in the currently displayed webpage via the browsing application, and the transmission of the information from the operating system of the mobile terminal to the webpage actually needs to be completed, that is, the information interaction between the operating system of the mobile terminal and the webpage needs to be realized. The information interaction method proposed by the embodiments of the present disclosure can be applied to the foregoing application scenario so as to realize the information interaction between the webpage and the operating system of the mobile terminal.

In the related technology, in order to ensure the security of the operating system of the mobile terminal, the browsing application creates a separate execution environment for the webpage when the webpage is loaded and displayed, and if the information in the operating system of the mobile terminal is required during the execution of the webpage, the browsing application needs to communicate with the operating system of the mobile terminal through a preset interface. If the browsing application is a built-in application of the mobile terminal, since the operating system of the mobile terminal provides a browser component for secondary programming for the built-in browsing application, an extended interface can be obtained through the secondary programming, thereby realizing communication therebetween. For non-built-in browsing applications such as third-party browsing applications, because the operating system does not provide any browser component available for secondary programming for these browsing applications, and such third-party browsing applications generally do not support secondary programming, no extended interface will be obtained for the browsing application to perform corresponding communication with the operating system of the mobile terminal with respect to the currently displayed webpage. It can be seen that, in the related technology, whether the information interaction between the operating system of the mobile terminal and the webpage can be realized is restricted by the browsing application for displaying the webpage. The information interaction method provided by the embodiments of the present disclosure may avoid the limitation by the browsing application, so that the information in the operating system of the mobile terminal may be used for displaying the webpage or may be displayed in the webpage, thereby realizing the information interaction between the webpage and the operating system of the mobile terminal.

Next, a structure of a system of the information interaction method provided by the embodiments of the present disclosure will be introduced.

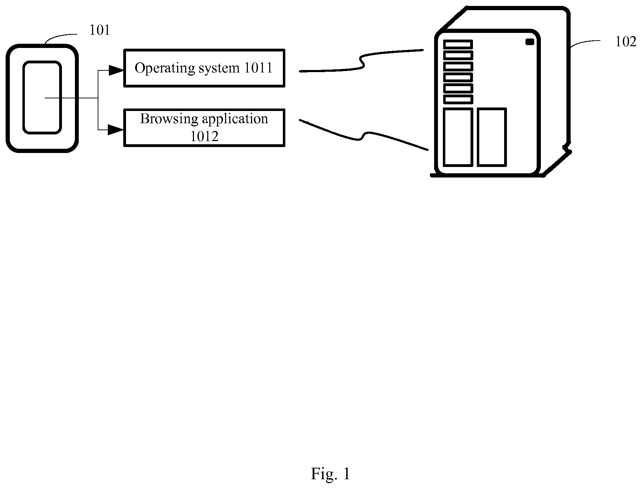

Fig. 1 is a diagram of a structure of a system of an information interaction method according to an embodiment of the present disclosure. As shown in Fig. 1, the system includes a mobile terminal 101 and a server 102, wherein a communication connection is established between the mobile terminal 101 and the server 102, through which communication can be performed between the mobile terminal 101 and the server 102.

It should be noted that the mobile terminal 101 may be a smart phone, a tablet computer, or the like. An operating system 1011 and a browsing application 1012 are installed in the mobile terminal 101. The operating system 1011 can be Android^{®} operating system, iOS^{®} operating system, or the like, and a TCP long connection is established between the operating system 1011 and the server 102. The browsing application 1012 can be a browser installed in the mobile terminal or an application including a browser kernel.

The server 102 can be an application server for the browsing application or a third-party server. Moreover, the server 102 can be a server, or a server cluster composed of a number of servers or a cloud computing service center.

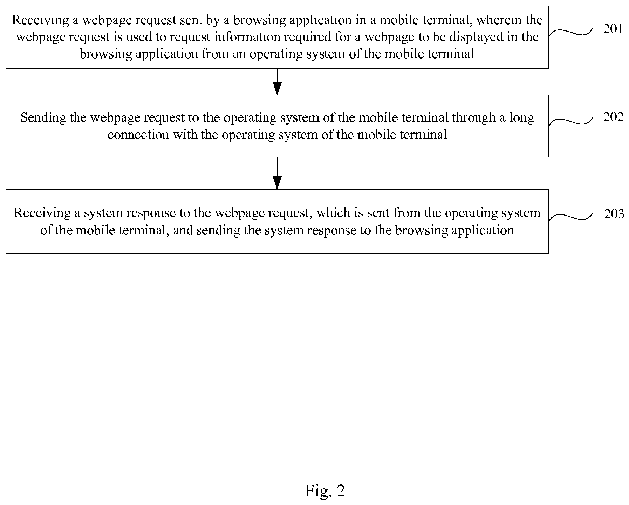

Fig. 2 is a flowchart showing an information interaction method according to an example. As shown in Fig. 2, the method is used in a server, and includes the following steps.

In step 201, a webpage request sent by a browsing application in a mobile terminal is received, wherein the webpage request is used to request information required for a webpage to be displayed in the browsing application from the operating system of the mobile terminal.

The browsing application may be a built-in application of the mobile terminal or a third-party application installed in the mobile terminal. The webpage request is used to request the information required for a webpage to be displayed in the browsing application from an operating system of the mobile terminal.

In step 202, the webpage request is sent to the operating system of the mobile terminal through a long connection with the operating system of the mobile terminal.

In step 203, a system response to the webpage request, which is sent from the operating system of the mobile terminal, is received and the system response is sent to the browsing application.

In the present disclosure, a server is receiving a webpage request sent by a browsing application in a mobile terminal. Thereafter, the server is sending the webpage request to an operating system of the mobile terminal through a long connection with the operating system of the mobile terminal, and is receiving a system response to the webpage request, which is sent from the operating system of the mobile terminal. Finally, the server is sending the received system response to the browsing application so as to complete information interaction between a webpage and the operating system of the mobile terminal. In the present disclosure, no matter whether the browsing application is an application built in the mobile terminal or a third-party application, the information interaction between the webpage loaded and displayed in the browsing application and the operating system can be achieved via the server. That is to say, the information interaction between the webpage and the operating system of the mobile terminal is no longer limited by the browsing application, and as compared to an information interaction method in the related technology, the information interaction method of the present disclosure has stronger applicability.

The webpage request includes a service name;
the sending the webpage request to the operating system of the mobile terminal through a long connection with the operating system of the mobile terminal includes:
determining a media access control (MAC) address of the mobile terminal based on the webpage request;
obtaining a connection identifier corresponding to the service name and the MAC address of the mobile terminal from a stored mapping relationship; and
sending the webpage request to the operating system of the mobile terminal through the long connection identified by the connection identifier.

Before obtaining the connection identifier corresponding to the service name and the MAC address of the mobile terminal from a stored mapping relationship, the method further includes:
establishing a long connection with the operating system of the mobile terminal when a connection request sent from the operating system of the mobile terminal is received, and assigning a connection identifier for uniquely identifying the long connection to the long connection;
obtaining the MAC address of the mobile terminal based on the connection request;
receiving a service registration request sent from the operating system of the mobile terminal through the long connection, wherein the service registration request carries the service name, and is used to request for registering the service name; and
correspondingly storing the service name, the MAC address of the mobile terminal and the connection identifier in the mapping relationship.

Optionally, the webpage request includes request content and a request identifier, wherein the request content is used to indicate information that the browsing application needs to request from the operating system of the mobile terminal, and the request identifier is used to uniquely identify the webpage request.

The sending the webpage request to the operating system of the mobile terminal through a long connection with the operating system of the mobile terminal includes:
sending the request content and the request identifier to the operating system of the mobile terminal through the long connection.

Optionally, the system response includes the request identifier and the information determined by the operating system of the mobile terminal for the request content.

All of the above optional technical solutions may be combined arbitrarily to form an embodiment of the present disclosure, and the embodiments of the present disclosure will not be elaborated herein.

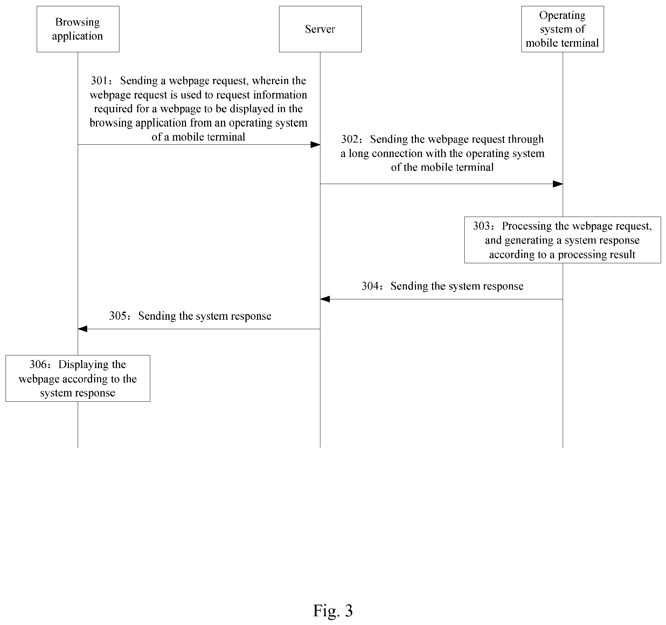

Fig. 3 is a flowchart showing an information interaction method according to an example. As shown in Fig. 3, the method is applied to the system shown in Fig. 1, and includes the following steps:

In step 301, the browsing application in the mobile terminal sends a webpage request to the server, wherein the webpage request is used to request information required for a webpage to be displayed in the browsing application from an operating system of the mobile terminal.

A browser or an application including a browser kernel is usually installed in the mobile terminal. In the embodiments of the present disclosure, for the convenience of following descriptions, such applications are collectively referred to as browsing applications. These browsing applications may be applications built in the mobile terminal or third-party applications installed in the mobile terminal.

When the browsing application is running, a webpage may be loaded and displayed according to the received webpage information. When the information in the operating system of the mobile terminal is required for the loading and displaying of the webpage, the browsing application may send the webpage request to the server. The browsing application obtains a DNS address of the server, and send a webpage request containing request content to the server according to the DNS address.

It should be noted that the DNS address of the server is configured in advance. For example, when the browsing application needs to obtain the information in the operating system of the mobile terminal during the loading and displaying of the webpage, the configured DNS address of the server is automatically obtained.

In addition, the request content is used to indicate the information that the browsing application needs to request from the operating system of the mobile terminal. Optionally, the request content may be an information identifier of the information to be requested, or may be used to indicate that an operation is to be performed on a piece of information. For example, if it is required to obtain a device identifier from the operating system of the mobile terminal currently, the request content may be a DeviceID, or the request content may be a get_DeviceID.

It should be noted that, because the browsing application may send a plurality of webpage requests successively, a sequence of responses of the operating system of the mobile terminal to the plurality of webpage requests may not be the same as a sequence in which the plurality of webpage requests are sent from the browsing application. Thus, in order to distinguish the plurality of webpage requests and the system responses to the plurality of webpage requests, the browsing application may assign a request identifier to each of the webpage requests. In this way, when the browsing application sends a webpage request to the server, the webpage request may further include a request identifier for uniquely identifying the webpage request that is assigned to the webpage request by the browsing application.

Optionally, in one or more embodiments of the present disclosure, considering that the server may provide a plurality of services for the mobile terminal, that is to say, the server may not only provide an information interaction service between the operating system of the mobile terminal and the browsing application, but also provide other services, based on this, the webpage request sent from the browsing application may further include a service name for identifying a service type as the information interaction service, so that the server may determine to provide what kind of service for the browsing application according to the service name after receiving the webpage request. Of course, if the server only provides the information interaction service between the operating system of the mobile terminal and the browsing application, the webpage request may include no service name.

In step 302, when the server receives the webpage request, the webpage request is sent to the operating system of the mobile terminal through a long connection with the operating system of the mobile terminal.

In a possible implementation manner, the long connection between the server and the operating system of the mobile terminal may be a long connection established by the server after receiving the webpage request from the mobile terminal. For example, after the server receives the webpage request sent from the browsing application of the mobile terminal, the server may establish a long connection with the operating system of the mobile terminal according to the webpage request, so that the server may directly send the webpage request to the operating system of the mobile terminal by the long connection which is currently established with the operating system of the mobile terminal.

In another possible implementation manner, the long connection between the server and the operating system of the mobile terminal may be a long connection established with the server by the operating system of the mobile terminal when detecting that the browsing application starts running. Alternatively, the long connection may be a long connection with the server established by the operating system of the mobile terminal when startup is completed. The long connection is a Transmission Control Protocol (TCP) connection. That is, the operating system of the mobile terminal may send a connection request to the server when the operating system of the mobile terminal is started up, or when the browsing application in the mobile terminal starts running. When the server receives the connection request, a long connection with the operating system of the mobile terminal is established.

Since the server may establish long connections with operating systems of a plurality of mobile terminals, in order to distinguish the long connection between the server and the operating system of each of the mobile terminals, the server may assign a connection identifier to each long connection. For example, after the server establishes a long connection with the operating system of the mobile terminal, a connection identifier for uniquely identifying the long connection may be assigned to the long connection. Further, after the server assigns the connection identifier for the established long connection, in order to associate each of the mobile terminals with the corresponding long connection, to subsequently allow the server to find the long connection corresponding to the mobile terminal after the server receives the webpage request of the mobile terminal. The server determines a MAC address of the mobile terminal according to the connection request sent from the operating system of the mobile terminal, and correspondingly store the MAC address of the mobile terminal and the connection identifier of the established long connection in a mapping relationship. The mapping relationship includes the MAC addresses of the plurality of mobile terminals and corresponding connection identifiers.

Optionally, based on the foregoing descriptions, the server may provide a plurality of types of services at the same time, therefore, in order to distinguish different connections corresponding to different services, after establishing a long connection with the server, the operating system of the mobile terminal may send a service registration request, which carries a service name, to the server. After receiving the service registration request, the server may register the service name based on the service registration request, and correspondingly store the service name, the MAC address of the mobile terminal and the connection identifier of the established long connection in the mapping relationship, and the mapping relationship is a mapping relationship among the service name, the MAC address and the connection identifier.

After the server establishes the long connection with the operating system of the mobile terminal in the above manner, if the server correspondingly stores the MAC address of the mobile terminal and the connection identifier of the established long connection in the mapping relationship, and if there is no service name existing in the mapping relationship, no service name is configured in the browsing application of the mobile terminal. In this way, the webpage request sent from the browsing application of the mobile terminal to the server will not include a service name. In this case, since the server establishes long connections with the plurality of mobile terminals, when receiving the webpage request, the server may determine the long connection with the operating system of the mobile terminal from the plurality of long connections according to the webpage request, and send the webpage request to the operating system of the mobile terminal according to the determined long connection.

It should be noted that, when the browsing application sends a webpage request to the server, according to the specifications of the TCP/IP protocol, the data packet of the webpage request may include a MAC address of a device that sends the data packet, so the server may obtain the MAC address included in the data packet, and the obtained MAC address is the MAC address of the mobile terminal. Thereafter, based on the foregoing descriptions, it can be seen that a mapping relationship between the MAC address and the connection identifier may be stored in the server. Therefore, the server may obtain a connection identifier corresponding to the MAC address of the mobile terminal from the mapping relationship. Here, the long connection identified by the obtained connection identifier is the long connection established between the operating system of the mobile terminal and the server. Through the determined long connection, the server can forward the received webpage request to the operating system of the mobile terminal.

Optionally, after the server establishes the long connection with the operating system of the mobile terminal in the foregoing manner, if the server correspondingly stores the service name, the MAC address of the mobile terminal and the connection identifier of the established long connection in the mapping relationship according to the received service registration request sent from the operating system of the mobile terminal, since there is a service name existing in the mapping relationship, the service name is configured in the browsing application of the mobile terminal as well, thus, when the browsing application of the mobile terminal sends the webpage request to the server since it is required to perform the information interaction with the operating system, the service name will be included in the webpage request. In this case, when receiving the webpage request, the server may determine the long connection with the operating system of the mobile terminal from the plurality of long connections according to the webpage request, thereby sending the webpage request to the operating system of the mobile terminal through the determined long connection.

The server may obtain the MAC address of the mobile terminal from the data packet of the webpage request, and then the server may obtain, from the stored mapping relationship, the service name included in the webpage request and the connection identifier corresponding to the MAC address of the mobile terminal, and the long connection identified by the obtained connection identifier is the long connection for information interaction between the server and the operating system of the mobile terminal. By the determined long connection, the server can forward the webpage request to the operating system of the mobile terminal.

It should be noted that, in the embodiments of the present disclosure, the server may directly forward the received webpage request to the operating system of the mobile terminal. The server may only send a portion of content of the webpage request to the operating system of the mobile terminal.

It can be seen from the foregoing that the webpage request includes not only the service name, but also the request content, the webpage request may further include the request identifier. Since the service name is mainly used to determine the long connection between the server and the operating system of the mobile terminal, after the server determines the long connection with the operating system of the mobile terminal according to the service name, the server may no longer send the service name to the operating system of the mobile terminal, that is to say, when sending the webpage request to the operating system of the mobile terminal, the server may not send the service name, but send other content included in the webpage request to the operating system of the mobile terminal. If the webpage request includes only the request content except for the service name, the server may send the request content to the operating system of the mobile terminal. If the webpage request includes the request content and the request identifier except for the service name, the server may send the request content and the request identifier to the operating system of the mobile terminal.

In step 303, when the operating system of the mobile terminal receives the webpage request, the webpage request is processed, and a system response is generated according to a processing result.

After the server sends the webpage request to the operating system of the mobile terminal, the operating system of the mobile terminal may receive the webpage request. After receiving the webpage request, the operating system of the mobile terminal may process the webpage request and generate a system response according to a processing result.

As can be seen from the step 302, the server may directly forward the webpage request to the operating system of the mobile terminal. In this case, after receiving the webpage request, the operating system of the mobile terminal may parse the webpage request, and perform corresponding data information processing on the request content included in the webpage request, thereby generating a system response including the processing result.

Optionally, if the server sends the request content in the webpage request to the operating system of the mobile terminal, after receiving the request content in the webpage request, the operating system of the mobile terminal may perform the data information processing on the request content, to generate a system response containing the processing result.

Optionally, if the server sends the request content and the request identifier in the webpage request to the operating system of the mobile terminal, after receiving the request content and the request identifier, the operating system of the mobile terminal may perform data information processing on the request content and generate a system response containing the processing result and the request identifier.

For example, it is assumed that the operating system of the mobile terminal receives the request content and the request identifier included in the webpage request, and the request content is get _DeviceID, and the request identifier is query-id=100. The operating system of the mobile terminal may obtain the device identifier abc***123 from the stored device information according to the request content, and then generate a system response including the obtained device identifier and the request identifier query-id=100.

In step 304, the operating system of the mobile terminal sends the system response to the server.

After generating the system response to the webpage request, the operating system of the mobile terminal may send the system response to the server. The system response may include information determined after processing the request content. In addition to this, the system response may further include the request identifier for identifying the webpage request corresponding to the request content.

In step 305, after receiving the system response, the server sends the system response to the browsing application.

In step 306, after receiving the system response, the browsing application of the mobile terminal displays the webpage according to the system response.

After the browsing application of the mobile terminal receives the system response, the browsing application may display the webpage according to information included in the system response.

The system response includes information determined by the operating system of the mobile terminal for the request content in the webpage request, and the browsing application may display the information included in the system response in the webpage after receiving the system response. In this way, the information stored in the operating system of the mobile terminal is finally presented in the webpage, that is, the information interaction between the operating system of the mobile terminal and the webpage is realized.

Alternatively, after receiving the system response, the browsing application may update or perform other operations on the currently displayed webpage according to the information included in the system response, so that the information stored in the operating system of the mobile terminal is finally used for execution of the webpage, that is, the information is information actually required for the webpage, and the information is acquired from the operating system of the mobile terminal to be finally used for displaying the webpage, in this way, the information interaction between the operating system of the mobile terminal and the webpage is realized.

Optionally, in addition to the information determined by the operating system of the mobile terminal for the request content in the webpage request, the system response may further include the request identifier. In the case where the browsing application sends a plurality of webpage requests, after receiving the system responses, the browsing application may determine, according to the request identifiers, to which webpage requests the system responses are sent by the operating system of the mobile terminal, and thus may determine how to display the corresponding webpage by using the information which is included in the system responses and is determined with respect to the request contents.

In the embodiments of the present disclosure, a server may receive a webpage request sent by a browsing application in a mobile terminal. Thereafter, the server may send the webpage request to the operating system of the mobile terminal through a long connection with the operating system of the mobile terminal, and receive a system response to the webpage request, which is sent from the operating system of the mobile terminal. Finally, the server may send the received system response to the browsing application so as to complete information interaction between a webpage and the operating system of the mobile terminal. It can be seen that, in the embodiments of the present disclosure, whatever the browsing application is an application built in the mobile terminal or a third-party application, the information interaction between the webpage loaded and displayed in the browsing application and the operating system can be achieved via the server. That is to say, the information interaction between the webpage and the operating system of the mobile terminal is no longer limited by the browsing application, and as compared to an information interaction method in the related technology, the information interaction method of the present disclosure has stronger applicability.

Next, an information interaction device provided by an embodiment of the present disclosure will be introduced.

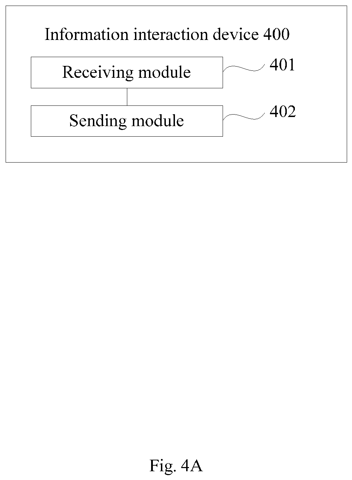

Fig. 4A is a block diagram illustrating an information interaction device 400 according to an example. Referring to Fig. 4A, the device includes a receiving module 401 and a sending module 402.

The receiving module 401 is configured to receive a webpage request sent by a browsing application in a mobile terminal, wherein the browsing application is a built-in application of the mobile terminal or a third-party application installed in the mobile terminal, and the webpage request is used to request information required for a webpage to be displayed in the browsing application from an operating system of the mobile terminal.

The sending module 402 is configured to send the webpage request to the operating system of the mobile terminal through a long connection with the operating system of the mobile terminal.

The receiving module 401 is further configured to receive a system response to the webpage request, which is sent from the operating system of the mobile terminal.

The sending module 402 is further configured to send the system response to the browsing application.

Optionally, the webpage request includes a service name.

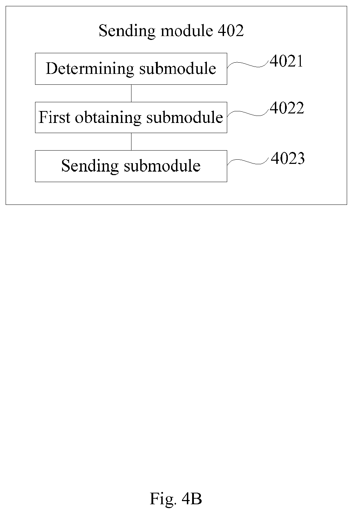

Referring to Fig. 4B, the sending module 402 includes:
a determining submodule 4021 configured to determine a media access control (MAC) address of the mobile terminal based on the webpage request;
a first obtaining submodule 4022 configured to obtain a service name and a connection identifier corresponding to the MAC address of the mobile terminal from a stored mapping relationship; and
a sending submodule 4023 configured to send the webpage request to the operating system of the mobile terminal through the long connection identified by the connection identifier.

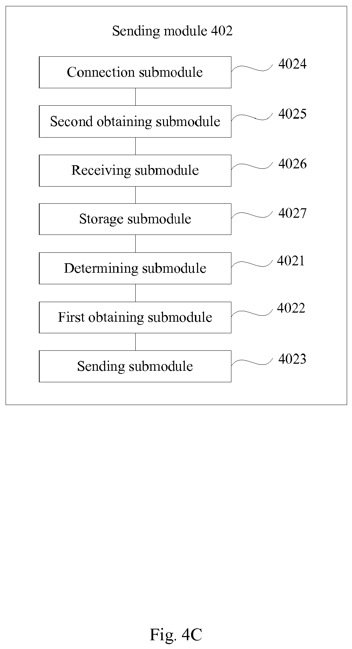

Optionally, referring to Fig. 4C, the sending module 402 further includes:
a connection submodule 4024 configured to establish a long connection with the operating system of the mobile terminal when a connection request sent from the operating system of the mobile terminal is received, and assign a connection identifier for uniquely identifying the long connection to the long connection;
a second obtaining submodule 4025 configured to obtain the MAC address of the mobile terminal based on the connection request;
a receiving submodule 4026 configured to receive a service registration request sent from the operating system of the mobile terminal through the long connection, wherein the service registration request carries a service name, and is used to request for registering the service name; and
a storage submodule 4027 configured to correspondingly store the service name, the MAC address of the mobile terminal and the connection identifier in the mapping relationship.

Optionally, the webpage request includes request content and a request identifier, wherein the request content is used to indicate the information that the browsing application needs to request from the operating system of the mobile terminal, and the request identifier is used to uniquely identify the webpage request.

The sending module 402 is specifically configured to:
send the request content and the request identifier to the operating system of the mobile terminal through the long connection.

Optionally, the system response includes the request identifier and the information determined by the operating system of the mobile terminal for the request content.

With respect to the device in the above embodiment, the specific manners for performing operations for individual modules therein have been described in detail in the embodiments regarding the method, which will not be elaborated herein.

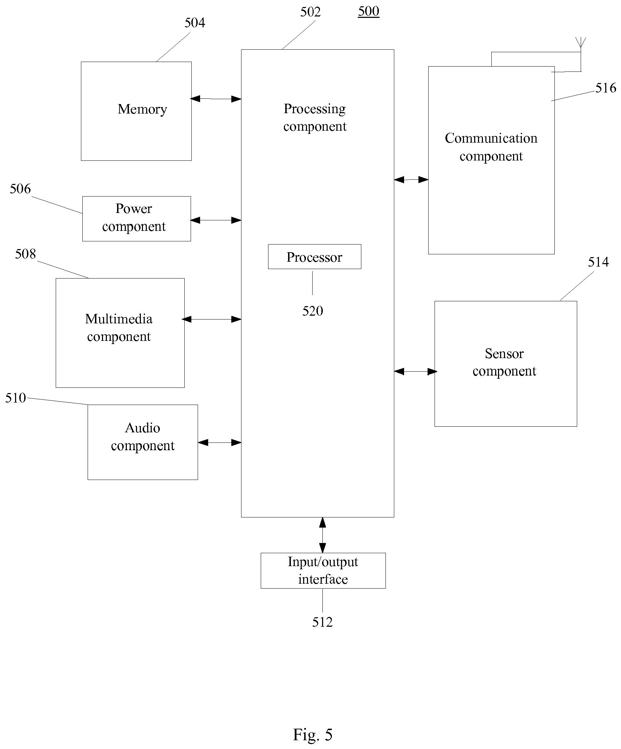

Fig. 5 is a block diagram illustrating an information interaction device 500 according to an example. For example, the device 500 may be a mobile phone, a computer, a digital broadcast terminal, a message transceiver device, a game console, a tablet device, a medical equipment, a fitness equipment, a personal digital assistant, and the like.

Referring to Fig. 5, the device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory or a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 508 includes a front camera and/or a rear camera. The front camera and the rear camera may receive an external multimedia data while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode or a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules such as a keyboard, a click wheel, buttons, and the like. The buttons may include, but are not limited to, a home button, a volume button, a starting button or a locking button.

The sensor component 514 includes one or more sensors to provide status assessments of various aspects of the device 500. For instance, the sensor component 514 may detect an open/closed status of the device 500, relative positioning of components, e.g., may be the display and the keypad of the device 500, may detect a change in position of the device 500 or a component of the device 500, a presence or absence of user contact with the device 500, an orientation or an acceleration/deceleration of the device 500 and a change in temperature of the device 500. The sensor component 514 may include a proximity sensor configured to detect the presence of nearby objects without any physical contact. The sensor component 514 may include a light sensor, such as a CMOS or CCD image sensor, for use in imaging applications as well. In some embodiments, the sensor component 514 may include an accelerometer sensor, a gyroscope sensor, a magnetic sensor, a pressure sensor, or a temperature sensor as well.

The communication component 516 is configured to facilitate communication, wired or wirelessly, between the device 500 and other devices. The device 500 can access a wireless network based on a communication standard, such as WiFi, 2G or 3G or a combination thereof. In one example, the communication component 516 receives a broadcast signal or broadcast-associated information from an external broadcast management system via a broadcast channel. In one example, the communication component 516 further includes a near field communication (NFC) module to facilitate short-range communications. For example, the NFC module may be realized based on a radio frequency identification (RFID) technology, an infrared data association (IrDA) technology, an ultra-wideband (UWB) technology, a Bluetooth (BT) technology or other technologies.

In examples, the device 500 may be realized with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, for performing operations carried out by the mobile terminal in the information interaction method provided by the embodiment illustrated in Fig. 3.

In examples, there is also provided a non-transitory computer-readable storage medium including instructions, such as the memory 504 including the instructions executable by the processor 520 in the device 500, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processor of a mobile terminal, makes the mobile terminal be enabled to perform related steps in the information interaction method provided by the embodiment illustrated in Fig. 3.

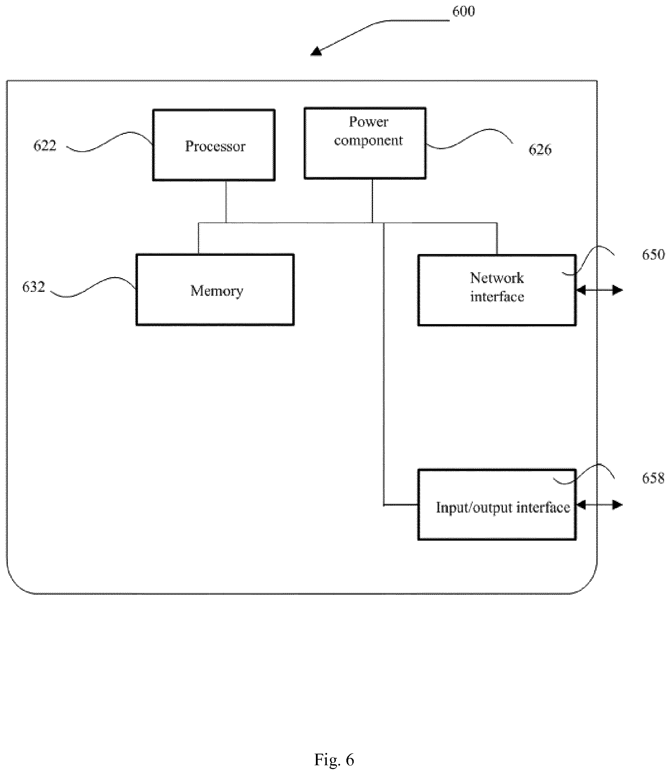

Fig. 6 is a block diagram illustrating an information interaction device 600 according to an example. For example, the device 600 may be provided as a server. Referring to Fig. 6, the device 600 includes a processor 622 that further includes one or more processors, and memory resources represented by a memory 632 for storing instructions executable by the processor 622, such as application programs. The application programs stored in the memory 632 may include one or more modules each corresponding to a set of instructions. Further, the processor 622 is configured to execute the instructions to perform the information interaction method provided by the embodiment illustrated in Fig. 2 and the steps carried out by the server in the information interaction method provided by the embodiment illustrated in Fig. 3.

The device 600 may further include one power component 626 configured to perform power management of the device 600, one wired or wireless network interface 650 configured to connect the device 600 to a network, and one input/output (I/O) interface 658. The device 600 may operate based on an operating system stored in the memory 632, such as Windows ServerTM, Mac OS XTM, UnixTM, LinuxTM, FreeBSDTM, or the like.

In examples, there is further provided a non-transitory computer readable storage medium including instructions, such as memory 632 including the instructions executable by the processor 622 in the device 600, for performing the above-described methods. For example, the non-transitory computer-readable storage medium may be a ROM, a random access memory (RAM), a CD-ROM, a magnetic tape, a floppy disc, an optical data storage device and the like.

There is provided a non-transitory computer readable storage medium having instructions stored thereon that, when executed by a processor of a server, enable the server to perform the information interaction method provided by the embodiment illustrated in Fig. 2 and the related steps in the information interaction method provided by the embodiment illustrated in Fig. 3.

The technical solution provided by the present disclosure may include the following beneficial effects: in the embodiments of the present disclosure, a server may receive a webpage request sent by a browsing application in a mobile terminal. Thereafter, the server may send the webpage request to an operating system of the mobile terminal through a long connection with the operating system of the mobile terminal, and receive a system response to the webpage request, which is sent from the operating system of the mobile terminal. Finally, the server may send the received system response to the browsing application so as to complete information interaction between a webpage and the operating system of the mobile terminal. It can be seen that, in the embodiments of the present disclosure, whatever the browsing application is an application built in the mobile terminal or a third-party application, the information interaction between the webpage loaded and displayed in the browsing application and the operating system can be achieved via the server. That is to say, the information interaction between the webpage and the operating system of the mobile terminal is no longer limited by the browsing application, and as compared to an information interaction method in the related technology, the information interaction method of the present disclosure has stronger applicability.

After considering this description and carrying out the embodiments disclosed herein, those skilled in the art may easily think of other implementation aspects of the present disclosure. The present disclosure is meant to cover any variations, usage or adaptive change of these embodiments, and these variations, usage or adaptive change follow general concept of the present disclosure and include the common knowledge or the customary technical means in the technical field that is not disclosed in the present disclosure.

It should be understood that the present disclosure is not limited to precise structures that are described above and shown in the accompanying drawings, and may be modified and changed without departing from the range of the present disclosure. The scope of the present disclosure is only defined by the appended claims.
system response to the webpage request, which is sent from the operating system of the mobile terminal. Finally, the server may send the received system response to the browsing application so as to complete information interaction between a webpage and the operating system of the mobile terminal. It can be seen that, in the embodiments of the present disclosure, whatever the browsing application is an application built in the mobile terminal or a third-party application, the information interaction between the webpage loaded and displayed in the browsing application and the operating system can be achieved via the server. That is to say, the information interaction between the webpage and the operating system of the mobile terminal is no longer limited by the browsing application, and as compared to an information interaction method in the related technology, the information interaction method of the present disclosure has stronger applicability.

After considering this description and carrying out the embodiments disclosed herein, those skilled in the art may easily think of other implementation aspects of the present disclosure. The present disclosure is meant to cover any variations, usage or adaptive change of these embodiments, and these variations, usage or adaptive change follow general concept of the present disclosure and include the common knowledge or the customary technical means in the technical field that is not disclosed in the present disclosure. The description and embodiments are only exemplary, and the real range and spirit of the present disclosure are defined by the following claims.

It should be understood that the present disclosure is not limited to precise structures that are described above and shown in the accompanying drawings, and may be modified and changed without departing from the range of the present disclosure. The scope of the present disclosure is only defined by the appended claims.

## Claims

1. An information interaction method, comprising:
a server receiving (201) a webpage request sent by a browsing application in a mobile terminal based on a preconfigured DNS address of the server, wherein the webpage request is used to request information required for a webpage to be displayed in the browsing application from an operating system of the mobile terminal;
sending (202) the webpage request to the operating system of the mobile terminal through a TCP connection with the operating system of the mobile terminal; and
the server receiving (203) a system response to the webpage request, which is sent from the operating system of the mobile terminal, and sending the system response to the browsing application,
wherein the webpage request comprises request content and a request identifier, the request content is used to indicate information that the browsing application needs to request from the operating system of the mobile terminal, and the request identifier is used to uniquely identify the webpage request; and the sending the webpage request to the operating system of the mobile terminal through the TCP connection with the operating system of the mobile terminal comprises: sending the request content and the request identifier to the operating system of the mobile terminal through the TCP connection,
wherein the system response comprises the request identifier and information determined by the operating system of the mobile terminal for the request content,
wherein the webpage request comprises a service name for identifying a service type; and
wherein sending (202) the webpage request to the operating system of the mobile terminal through the TCP connection with the operating system of the mobile terminal comprises:
determining a media access control (MAC) address of the mobile terminal based on the webpage request;
obtaining a connection identifier corresponding to the service name and the MAC address of the mobile terminal from a stored mapping relationship; and
sending the webpage request to the operating system of the mobile terminal through the TCP connection identified by the connection identifier.

2. The method according to claim 1, further comprising:
establishing the TCP connection with the operating system of the mobile terminal when a connection request sent from the operating system of the mobile terminal is received, and assigning the connection identifier for uniquely identifying the TCP connection to the TCP connection;
obtaining the MAC address of the mobile terminal based on the connection request;
receiving a service registration request sent from the operating system of the mobile terminal through the TCP connection, wherein the service registration request carries the service name, and is used to request for registering the service name; and
correspondingly storing the service name, the MAC address of the mobile terminal and the connection identifier in the mapping relationship.

3. An information interaction device (400), comprising:
a receiving module (401) configured to receive a webpage request sent by a browsing application in a mobile terminal based on a preconfigured DNS address of the information interaction device (400), wherein the browsing application is a built-in application of the mobile terminal or a third-party application installed in the mobile terminal, and the webpage request is used to request information required for a webpage to be displayed in the browsing application from an operating system of the mobile terminal; and
a sending module (402) configured to send the webpage request to the operating system of the mobile terminal through a TCP connection with the operating system of the mobile terminal, wherein
the receiving module (401) is configured to receive a system response to the webpage request, which is sent from the operating system of the mobile terminal; and
the sending module (402) is configured to send the system response to the browsing application,
wherein the webpage request comprises request content and a request identifier, the request content is used to indicate information that the browsing application needs to request from the operating system of the mobile terminal, and the request identifier is used to uniquely identify the webpage request; and the sending module (402) is specifically configured to: send the request content and the request identifier to the operating system of the mobile terminal through the TCP connection,
wherein the system response comprises the request identifier and information determined by the operating system of the mobile terminal for the request content,
wherein the webpage request comprises a service name for identifying a service type; and
the sending module (402) comprises:
a determining submodule (4021) configured to determine a media access control (MAC) address of the mobile terminal based on the webpage request;
a first obtaining submodule (4022) configured to obtain a connection identifier corresponding to the service name and the MAC address of the mobile terminal from a stored mapping relationship; and
a sending submodule (4023) configured to send the webpage request to the operating system of the mobile terminal through the TCP connection identified by the connection identifier.

4. The device according to claim 3, wherein the sending module (402) further comprises:
a connection submodule (4024) configured to establish the TCP connection with the operating system of the mobile terminal when a connection request sent from the operating system of the mobile terminal is received, and assign the connection identifier for uniquely identifying the TCP connection to the TCP connection;
a second obtaining submodule (4025) configured to obtain the MAC address of the mobile terminal based on the connection request;
a receiving submodule (4026) configured to receive a service registration request sent from the operating system of the mobile terminal through the TCP connection, wherein the service registration request carries the service name, and is used to request for registering the service name; and
a storage submodule (4027) configured to correspondingly store the service name, the MAC address of the mobile terminal and the connection identifier in the mapping relationship.

5. A program product having instructions stored thereon that, when executed by a processor, implement the steps of the method according to any one of claim 1 or 2.

## Patentansprüche

1. Ein Informationsinteraktionsverfahren, das Folgendes umfasst:
einen Server, der eine Webseitenanforderung empfängt (201), die von einer Browsing-Anwendung in einem mobilen Endgerät auf der Grundlage einer vorkonfigurierten DNS-Adresse des Servers gesendet wird, wobei die Webseitenanforderung verwendet wird, um Informationen, die für eine in der Browsing-Anwendung anzuzeigende Webseite erforderlich sind, von einem Betriebssystem des mobilen Endgeräts anzufordern;
Senden (202) der Webseiten-Anforderung an das Betriebssystem des mobilen Endgerätes über eine TCP-Verbindung mit dem Betriebssystem des mobilen Endgerätes; und
der Server empfängt (203) eine Systemantwort auf die Webseitenanfrage, die vom Betriebssystem des mobilen Endgeräts gesendet wird, und sendet die Systemantwort an die Browsing-Anwendung,
wobei die Webseitenanforderung einen Anforderungsinhalt und einen Anforderungsbezeichner umfasst, der Anforderungsinhalt verwendet wird, um Informationen anzuzeigen, die die Browsing-Anwendung von dem Betriebssystem des mobilen Endgeräts anfordern muss, und der Anforderungsbezeichner verwendet wird, um die Webseitenanforderung eindeutig zu identifizieren; und das Senden der Webseitenanforderung an das Betriebssystem des mobilen Endgeräts über die TCP-Verbindung mit dem Betriebssystem des mobilen Endgeräts umfasst: Senden des Anforderungsinhalts und des Anforderungsbezeichners an das Betriebssystem des mobilen Endgeräts über die TCP-Verbindung,
wobei die Systemantwort den Anforderungsidentifikator und die vom Betriebssystem des mobilen Endgerätes ermittelten Informationen für den Anforderungsinhalt umfasst,
wobei die Webseitenanforderung einen Dienstnamen zur Identifizierung eines Diensttyps umfasst; und
wobei das Senden (202) der Webseitenanforderung an das Betriebssystem des mobilen Endgerätes über die TCP-Verbindung mit dem Betriebssystem des mobilen Endgerätes umfasst:
Bestimmung einer MAC-Adresse (Media Access Control) des mobilen Endgeräts auf der Grundlage der Webseitenanforderung;
Erhalten eines Verbindungsidentifizierers, der dem Dienstnamen und der MAC-Adresse des mobilen Endgerätes entspricht, aus einer gespeicherten Zuordnungsbeziehung; und
Senden der Webseitenanforderung an das Betriebssystem des mobilen Endgeräts über die TCP-Verbindung, die durch den Verbindungsidentifikator identifiziert wird.

2. Das Verfahren nach Anspruch 1 ferner umfassend:
Herstellen der TCP-Verbindung mit dem Betriebssystem des mobilen Endgerätes, wenn eine vom Betriebssystem des mobilen Endgerätes gesendete Verbindungsanforderung empfangen wird, und Zuweisen des Verbindungsidentifizierers zur eindeutigen Identifizierung der TCP-Verbindung zu der TCP-Verbindung;
Ermittlung der MAC-Adresse des mobilen Endgerätes auf der Grundlage der Verbindungsanfrage;
Empfangen einer Dienstregistrierungsanforderung, die von dem Betriebssystem des mobilen Endgeräts über die TCP-Verbindung gesendet wird, wobei die Dienstregistrierungsanforderung den Dienstnamen trägt und verwendet wird, um die Registrierung des Dienstnamens anzufordern; und
den Dienstnamen, die MAC-Adresse des mobilen Endgeräts und den Verbindungsidentifikator in der Zuordnungsbeziehung entsprechend zu speichern.

3. Eine Informationsinteraktionsvorrichtung (400), die Folgendes umfasst:
ein Empfangsmodul (401), das so konfiguriert ist, dass es eine Webseitenanforderung empfängt, die von einer Browsing-Anwendung in einem mobilen Endgerät auf der Grundlage einer vorkonfigurierten DNS-Adresse der Informationsinteraktionsvorrichtung (400) gesendet wird, wobei die Browsing-Anwendung eine eingebaute Anwendung des mobilen Endgeräts oder eine Anwendung eines Drittanbieters ist, die in dem mobilen Endgerät installiert ist, und die Webseitenanforderung verwendet wird, um Informationen, die für eine in der Browsing-Anwendung anzuzeigende Webseite erforderlich sind, von einem Betriebssystem des mobilen Endgeräts anzufordern; und
ein Sendemodul (402), das so konfiguriert ist, dass es die Webseitenanforderung an das Betriebssystem des mobilen Endgeräts über eine TCP-Verbindung mit dem Betriebssystem des mobilen Endgeräts sendet, wobei
das Empfangsmodul (401) so konfiguriert ist, dass es eine Systemantwort auf die Webseitenanforderung empfängt, die von dem Betriebssystem des mobilen Endgeräts gesendet wird; und
das Sendemodul (402) so konfiguriert ist, dass es die Systemantwort an die Browsing-Anwendung sendet,
wobei die Webseitenanforderung einen Anforderungsinhalt und einen Anforderungsbezeichner umfasst, der Anforderungsinhalt verwendet wird, um Informationen anzuzeigen, die die Browsing-Anwendung von dem Betriebssystem des mobilen Endgeräts anfordern muss, und der Anforderungsbezeichner verwendet wird, um die Webseitenanforderung eindeutig zu identifizieren; und das Sendemodul (402) speziell konfiguriert ist, um: den Anforderungsinhalt und den Anforderungsbezeichner an das Betriebssystem des mobilen Endgeräts über die TCP-Verbindung zu senden,
wobei die Systemantwort die Anforderungskennung und die vom Betriebssystem des mobilen Endgeräts für den Anforderungsinhalt bestimmten Informationen umfasst,
wobei die Webseitenanforderung einen Dienstnamen zur Identifizierung eines Diensttyps umfasst; und
das Sendemodul (402) umfasst:
ein Bestimmungs-Submodul (4021), das so konfiguriert ist, dass es eine MAC-Adresse (Media Access Control) des mobilen Endgeräts auf der Grundlage der Webseitenanforderung bestimmt;
ein erstes Erfassungs-Submodul (4022), das so konfiguriert ist, dass es einen Verbindungsidentifikator, der dem Dienstnamen und der MAC-Adresse des mobilen Endgeräts entspricht, aus einer gespeicherten Zuordnungsbeziehung erhält; und
ein Sende-Submodul (4023), das so konfiguriert ist, dass es die Webseitenanforderung ü ber die durch den Verbindungsidentifikator identifizierte TCP-Verbindung an das Betriebssystem des mobilen Endgeräts sendet.

4. Vorrichtung nach Anspruch 3, wobei das Sendemodul (402) ferner umfasst:
ein Verbindungsteilmodul (4024), das so konfiguriert ist, dass es die TCP-Verbindung mit dem Betriebssystem des mobilen Endgeräts herstellt, wenn eine vom Betriebssystem des mobilen Endgeräts gesendete Verbindungsanforderung empfangen wird, und der TCP-Verbindung den Verbindungsidentifikator zur eindeutigen Identifizierung der TCP-Verbindung zuweist;
ein zweites Erfassungs-Submodul (4025), das so konfiguriert ist, dass es die MAC-Adresse des mobilen Endgeräts auf der Grundlage der Verbindungsanfrage erfasst;
ein Empfangssubmodul (4026), das so konfiguriert ist, dass es eine Dienstregistrierungsanforderung empfängt, die von dem Betriebssystem des mobilen Endgeräts über die TCP-Verbindung gesendet wird, wobei die Dienstregistrierungsanforderung den Dienstnamen trägt und verwendet wird, um die Registrierung des Dienstnamens anzufordern; und
ein Speichersubmodul (4027), das so konfiguriert ist, dass es den Dienstnamen, die MAC-Adresse des mobilen Endgeräts und den Verbindungsidentifikator in der Zuordnungsbeziehung entsprechend speichert.

5. Programmprodukt mit darauf gespeicherten Befehlen, die, wenn sie von einem Prozessor ausgeführt werden, die Schritte des Verfahrens nach einem der Ansprüche 1 oder 2 implementieren.

## Revendications

1. Méthode d'interaction de l'information comprenant
un serveur recevant (201) une demande de page web envoyée par une application de navigation dans un terminal mobile sur la base d'une adresse DNS préconfigurée du serveur , la demande de page web étant utilisée pour demander à un système d'exploitation du terminal mobile les informations nécessaires à l'affichage d'une page web dans l'application de navigation ;
envoyer (202) la demande de page web au système d'exploitation du terminal mobile via une connexion TCP avec le système d'exploitation du terminal mobile ; et
le serveur reçoit (203) une réponse du système à la demande de page web, envoyée par le système d'exploitation du terminal mobile, et envoie la réponse du système à l'application de navigation,
dans laquelle la demande de page web comprend un contenu de demande et un identificateur de demande, le contenu de demande étant utilisé pour indiquer les informations que l'application de navigation doit demander au système d'exploitation du terminal mobile, et l'identificateur de demande étant utilisé pour identifier de manière unique la demande de page web ; et l'envoi de la demande de page web au système d'exploitation du terminal mobile par le biais de la connexion TCP avec le système d'exploitation du terminal mobile comprend : l'envoi du contenu de demande et de l'identificateur de demande au système d'exploitation du terminal mobile par le biais de la connexion TCP ,
dans laquelle la réponse du système comprend l'identifiant de la demande et des informations déterminées par le système d'exploitation du terminal mobile pour le contenu de la demande,
dans laquelle la demande de page web comprend un nom de service permettant d'identifier un type de service ; et
dans lequel l'envoi (202) de la demande de page web au système d'exploitation du terminal mobile via la connexion TCP avec le système d'exploitation du terminal mobile comprend :
déterminer une adresse de contrôle d'accès au support (MAC) du terminal mobile sur la base de la demande de page web ;
obtenir un identifiant de connexion correspondant au nom de service et à l'adresse MAC du terminal mobile à partir d'une relation de mappage stockée ; et
envoyer la demande de page web au système d'exploitation du terminal mobile via la connexion TCP identifiée par l'identifiant de connexion.

2. La méthode selon la revendication 1, comprenant en outre :
établir la connexion TCP avec le système d'exploitation du terminal mobile lorsqu'une demande de connexion envoyée par le système d'exploitation du terminal mobile est reçue, et attribuer l'identifiant de connexion pour identifier de manière unique la connexion TCP à la connexion TCP ;
obtenir l'adresse MAC du terminal mobile sur la base de la demande de connexion ;
recevoir une demande d'enregistrement de service envoyée par le système d'exploitation du terminal mobile via la connexion TCP, la demande d'enregistrement de service contenant le nom de service et étant utilisée pour demander l'enregistrement du nom de service ; et
stocker de manière correspondante le nom du service, l'adresse MAC du terminal mobile et l'identificateur de connexion dans la relation de mise en correspondance.

3. Dispositif d'interaction avec l'information (400), comprenant :
un module de réception (401) configuré pour recevoir une demande de page web envoyée par une application de navigation dans un terminal mobile sur la base d'une adresse DNS préconfigurée du dispositif d'interaction d'informations (400) , dans lequel l'application de navigation est une application intégrée du terminal mobile ou une application tierce installée dans le terminal mobile, et la demande de page web est utilisée pour demander à un système d'exploitation du terminal mobile les informations nécessaires à l'affichage d'une page web dans l'application de navigation ; et
un module d'envoi (402) configuré pour envoyer la demande de page web au système d'exploitation du terminal mobile par le biais d'une connexion TCP avec le système d'exploitation du terminal mobile, dans lequel
le module de réception (401) est configuré pour recevoir une réponse du système à la demande de page web, envoyée par le système d'exploitation du terminal mobile ; et
le module d'envoi (402) est configuré pour envoyer la réponse du système à l'application de navigation,
La demande de page web comprend un contenu de demande et un identificateur de demande, le contenu de demande est utilisé pour indiquer les informations que l'application de navigation doit demander au système d'exploitation du terminal mobile, et l'identificateur de demande est utilisé pour identifier de manière unique la demande de page web ; et le module d'envoi (402) est spécifiquement configuré pour : envoyer le contenu de demande et l'identificateur de demande au système d'exploitation du terminal mobile par l'intermédiaire de la connexion TCP,
la réponse du système comprend l'identifiant de la demande et les informations déterminées par le système d'exploitation du terminal mobile pour le contenu de la demande,
dans laquelle la demande de page web comprend un nom de service permettant d'identifier un type de service ; et
le module d'envoi (402) comprend
un sous-module de détermination (4021) configuré pour déterminer une adresse de contrôle d'accès au support (MAC) du terminal mobile sur la base de la demande de page web ;
un premier sous-module d'obtention (4022) configuré pour obtenir un identifiant de connexion correspondant au nom de service et à l'adresse MAC du terminal mobile à partir d'une relation de mappage stockée ; et
un sous-module d'envoi (4023) configuré pour envoyer la demande de page web au système d'exploitation du terminal mobile via la connexion TCP identifiée par l'identifiant de connexion.

4. Dispositif selon la revendication 3, dans lequel le module d'envoi (402) comprend en outre :
un sous-module de connexion (4024) configuré pour établir la connexion TCP avec le système d'exploitation du terminal mobile lorsqu'une demande de connexion envoyée par le système d'exploitation du terminal mobile est reçue, et attribuer l'identifiant de connexion pour identifier de manière unique la connexion TCP à la connexion TCP ;
un deuxième sous-module d'obtention (4025) configuré pour obtenir l'adresse MAC du terminal mobile sur la base de la demande de connexion ;
un sous-module de réception (4026) configuré pour recevoir une demande d'enregistrement de service envoyée par le système d'exploitation du terminal mobile via la connexion TCP, la demande d'enregistrement de service comportant le nom de service et étant utilisée pour demander l'enregistrement du nom de service ; et
un sous-module de stockage (4027) configuré pour stocker en correspondance le nom de service, l'adresse MAC du terminal mobile et l'identificateur de connexion dans la relation de mise en correspondance.

5. Produit programme comportant des instructions stockées qui, lorsqu'elles sont exécutées par un processeur, mettent en oeuvre les étapes de la méthode selon l'une des revendications 1 ou 2.
